# EUROPEAN PATENT APPLICATION

(11) **EP 3 319 261 A1**
(43) Date of publication of application: **09.05.2018**
(21) Application number: 17200023.4
(22) Date of filing: 03.11.2017
(51) Int. Cl.: H04L 5/00, H04L 27/26

(54) **LONG TRAINING FIELD SIZE INDICATION**

(30) Priority: 03.11.2016 US 201662417042 P; 29.06.2017 WO PCT/US2017/039987
(71) Applicant: Intel IP Corporation, Santa Clara, CA 95054 (US)
(72) Inventor: LI, Qinghua, San Ramon, CA California 94582 (US); JIANG, Feng, Santa Clara, CA California 95054 (US); CHEN, Xiaogang, Hillsboro, OR Oregon 97124 (US); NIU, Huaning, Milpitas, CA California 95035 (US); GUREVITZ, Assaf, Ramat Hasharon Ramat Hasharon (IL); AVITAL, Ziv, 31015 Haifa (IL)
(74) Representative: HGF Limited

(57) **Abstract**

An apparatus and related method of a wireless device are provided to encode or decode one or more indication bits in a high-efficiency signal A (HE-SIG-A) field in a preamble of a physical layer convergence protocol (PLCP) protocol data unit (PPDU) to indicate a backup mode that is a 4x long training field (LTF) with 0.8 µs cyclic prefix (CP) mode. One or more indication bits is selected from a Doppler bit, a dual carrier modulation (DCM) bit, a space-time block coding (STBC) bit, and a transmit beamforming (TxBF) bit. The PPDU is transmitted to or received from another wireless device.

## Description

### TECHNICAL FIELD

Described herein are wireless networks and wireless communications with various aspects. Some aspects relate to wireless local area networks (WLANs) and Wi-Fi networks including networks operating in accordance with the Institute of Electrical and Electronics Engineers (IEEE) 802.11 family of standards. Some aspects relate to IEEE 802.11ax. Some aspects relate to methods, computer readable media, and apparatus for an indication for additional long training field (LTF) plus cyclic prefix (CP) size.

### BACKGROUND

Efficient use of the resources of a WLAN is important to provide bandwidth and acceptable response times to the users of the WLAN. However, often there are many devices trying to share the same resources and some devices may be limited by the communication protocol they use or by their hardware bandwidth. Moreover, wireless devices may need to operate with both newer protocols and with legacy device protocols.

### ACRONYMS

The following acronyms are used herein:

**Table 1 Acronyms**

| | |
|---|---|
| AP | access point |
| BSS | basic service set |
| BF | beamforming |
| CD-ROM | compact disk read only memory |
| CDMA | code division multiple access |
| CP | cyclic prefix |
| CPU | central processing unit |
| CRC | cyclical redundancy check |
| DCM | dual sub-carrier modulation |
| DVD-ROM | digital versatile disk-read only memory |
| EDGE | Enhanced Data rates for GSM Evolution |
| EEPROM | electrically erasable programmable read only memory |
| EPROM | erasable programmable read only memory |
| ESS | extended service set |
| EV-DO | Evolution-Data Optimized |
| FDMA | frequency division multiple access |
| FFT | fast Fourier transform |
| GERAN | GSM EDGE |
| GI | guard interval |
| GO | group owner |
| GPS | global positioning system |
| GPU | graphics processing unit |
| GSM | Global System for Mobile Communications |
| HE | high-efficiency (e.g., representative of IEEE 802.1 1ax) |
| HE-SIG | HE signal |
| HE-SIG-A | HE signal A field |
| HE-SIG-B | HE signal B field |
| HTTP | hypertext transfer protocol |
| IEEE | Institute of Electrical and Electronics Engineers |
| IP | internet protocol |
| IR | infrared |
| LAN | local area network |
| LDPC | low-density parity-check |
| LTE | Long Term Evolution |
| LTF | long training field |
| MAC | media access control |
| MCS | modulation coding scheme |
| MIMO | multiple-input multiple-output |
| MISO | multiple-input single-output |
| MMSE | minimum mean square error |
| MU | multiple-user |
| NFC | near field communication |
| OFDMA | orthogonal frequency-division multiple-access |
| P2P | peer-to-peer |
| PC | personal computer |
| PDA | personal digital assistant |
| PE | packet extension |
| PHY | physical layer |
| PLCP | physical layer convergence protocol |
| POTS | plain old telephone system |
| PPDU | PLCP protocol data unit; physical layer data unit |
| RAM | random access memory |
| ROM | read-only memory |
| RU | resource unit |
| RX or Rx | receive |
| SDMA | space-division multiple access |
| SIMO | single-input multiple-output |
| STA | station |
| STB | set top box |
| STBC | space-time block coding |
| SU | single user |
| TCP | transmission control protocol |
| TDMA | time division multiple access |
| TX or Tx | transmit |
| TXOP | transmit opportunity |
| UDP | user datagram protocol |
| UI | user interface |
| UL | uplink |
| UMTS | universal mobile telecommunications system |
| USB | universal serial bus |
| WAN | wide area network |
| WiGig | Wireless Gigabit Alliance |
| WiMAX | Worldwide Interoperability for Microwave Access |
| WLAN | wireless local area network |

### BRIEF DESCRIPTION OF THE DRAWINGS

The present disclosure is illustrated by way of example and not limitation in the figures of the accompanying drawings, in which like references indicate similar elements and in which:
FIG. 1 is a block diagram that illustrates a WLAN, in accordance with some aspects.
FIG. 2 is a graph showing signal degradation caused by interpolation mismatch between a transmitter and a receiver, in accordance with some aspects.
FIGS. 3A and 3B are block diagrams illustrating an example HE-SIG-A field for an HE SU PPDU and HE Extended range SU PPDU, in accordance with some aspects.
FIGS. 4A and 4B are flowcharts illustrating a process for implementing an example HE-SIG-A field for an HE SU PPDU and HE Extended range SU PPDU, in accordance with some aspects.
FIG. 5 is a block diagram that illustrates an example machine upon which any one or more of the techniques (e.g., methodologies) discussed herein may perform, in accordance with some aspects.

### DETAILED DESCRIPTION

The following description and the drawings sufficiently illustrate specific aspects to enable those skilled in the art to practice them. Other aspects may incorporate structural, logical, electrical, process, and other changes. Portions and features of some aspects may be included in, or substituted for, those of other aspects. Aspects set forth in the claims encompass all available equivalents of those claims.

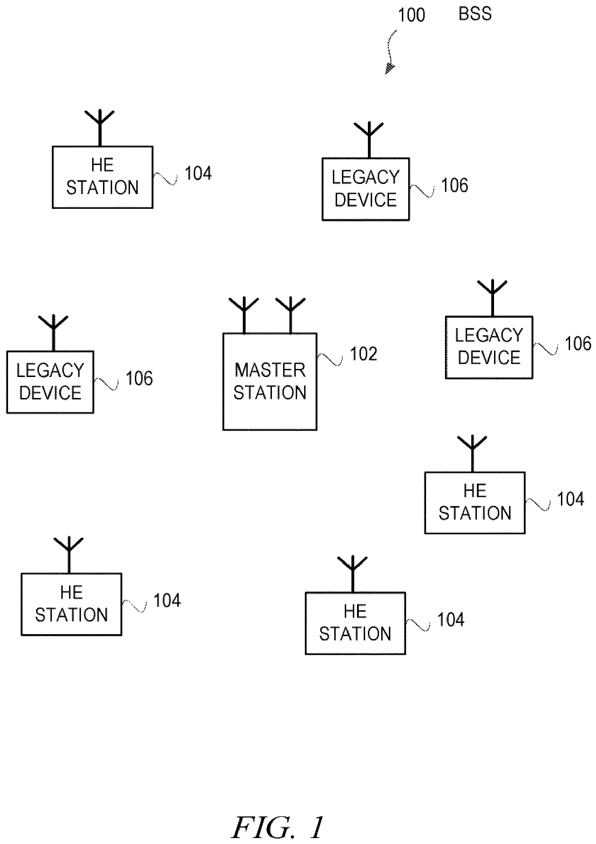

FIG. 1 is a block diagram that illustrates a WLAN 100 in accordance with some aspects. The WLAN may comprise a BSS 100 that may include a master station 102, which may be an AP, a plurality of HE (e.g., IEEE 802.1 lax) devices 104, and a plurality of legacy (e.g., IEEE 802.11n/ac) devices 106 according to the IEEE 802.11-2016 Standard for Information Technology-Telecommunications and Information Exchange between Systems Local and Metropolitan Area Networks-Specific Requirements - Part 11: Wireless LAN Medium Access Control (MAC) and Physical Layer (PHY) Specifications, published December 14, 2016.

The master station 102 may be an AP using one of the IEEE 802.11 protocols to transmit and receive. The master station 102 may be a base station. The master station 102 may use other communications protocols as well as the IEEE 802.11 protocol. The IEEE 802.11 protocol may be IEEE 802.11ax. The IEEE 802.11 protocol may include using OFDMA, TDMA, and/or CDMA. The IEEE 802.11 protocol may include a multiple access technique. For example, the IEEE 802.11 protocol may include SDMA and/or MU-MIMO. The master station 102 and/or HE station 104 may use one or both of MU-MIMO and OFDMA. There may be more than one master station 102 that is part of an ESS. A controller (not illustrated) may store information that is common to the more than one master station 102. The controller may have access to an external network such as the Internet.

The legacy devices 106 may operate in accordance with one or more of IEEE 802.11 a/b/g/n/ac/ad/af/ah/aj, or another legacy wireless communication standard. The legacy devices 106 may be STAs or IEEE 802.11 STAs. The HE stations 104 may be wireless transmit and receive devices such as cellular telephone, smart telephone, handheld wireless device, wireless glasses, wireless watch, wireless personal device, tablet, or another device that may be transmitting and receiving using the IEEE 802.11 protocol such as IEEE 802.11ax or another wireless protocol such as IEEE 802.11az. In some aspects, the HE stations 104, master station 102, and/or legacy devices 106 may be termed wireless devices. In some aspects, the HE station 104 may be a GO for peer-to-peer modes of operation where the HE station 104 may perform some operations of a master station 102.

The master station 102 may communicate with legacy devices 106 in accordance with legacy IEEE 802.11 communication techniques. In example aspects, the master station 102 may also be configured to communicate with HE stations 104 in accordance with legacy IEEE 802.11 communication techniques.

In some aspects, an HE frame may be configurable to have the same bandwidth as a channel. The bandwidth of a channel may be 20MHz, 40MHz, or 80MHz, 160MHz, 320MHz contiguous bandwidths or an 80+80MHz (160MHz) non-contiguous bandwidth. In some aspects, the bandwidth of a channel may be 1 MHz, 1.25MHz, 2.03MHz, 2.5MHz, 5MHz and 10MHz, or a combination thereof or another bandwidth that is less or equal to the available bandwidth may also be used. In some aspects, the bandwidth of the channels may be based on a number of active subcarriers. In some aspects, the bandwidth of the channels are multiples of 26 (e.g., 26, 52, 104, etc.) active subcarriers or tones that are spaced by 20 MHz. In some aspects, the bandwidth of the channels are 26, 52, 104, 242, etc. active data subcarriers or tones that are space 20 MHz apart. In some aspects, the bandwidth of the channels is 256 tones spaced by 20 MHz. In some aspects, a 20 MHz channel may comprise 256 tones for a 256 point FFT. In some aspects, a different number of tones is used. In some aspects, the OFDMA structure consists of a 26-subcarrier RU, 52-subcarrier RU, 106-subcarrier RU, 242-subcarrier RU, 484-subcarrier RU and 996-subcarrier RU. Resource allocations for an SU consist of a 242 subcarrier RU, 484-subcarrier RU, 996-subcarrier RU and 2x996-subcarrier RU.

An HE frame may be configured for transmitting a number of spatial streams, which may be in accordance with MU-MIMO. In some aspects, an HE frame may be configured for transmitting in accordance with one or both of OFDMA and MU-MIMO. In other aspects, the master station 102, HE station 104, and/or legacy device 106 may also implement different technologies such as CDMA 2000, CDMA 2000 IX, CDMA 2000 EV-DO, Interim Standard 2000 (IS-2000), Interim Standard 95 (IS-95), WiMAX, BlueTooth®, WiGig, or other technologies.

Some aspects relate to HE communications. In accordance with some IEEE 802.11ax aspects, a master station 102 may operate as a master station which may be arranged to contend for a wireless medium (e.g., during a cyclic prefix) to receive exclusive control of the medium for an HE control period. In some aspects, the HE control period may be termed a TXOP. The master station 102 may transmit an hemaster-sync transmission, which may be a trigger frame or HE control and schedule transmission, at the beginning of the HE control period. The master station 102 may transmit a time duration of the TXOP and channel information. During the HE control period, HE stations 104 may communicate with the master station 102 in accordance with a non-contention based multiple access technique such as OFDMA and/or MU-MIMO. This is unlike conventional WLAN communications in which devices communicate in accordance with a contention-based communication technique, rather than a multiple access technique. During the HE control period, the master station 102 may communicate with HE stations 104 using one or more HE frames. During the HE control period, the HE STAs 104 may operate on a channel smaller than the operating range of the master station 102. During the HE control period, legacy stations refrain from communicating.

In accordance with some aspects, during the master-sync transmission the HE STAs 104 may contend for the wireless medium with the legacy devices 106 being excluded from contending for the wireless medium during the master-sync transmission or TXOP. In some aspects, the trigger frame may indicate a UL MU-MIMO and/or UL OFDMA control period. In some aspects, the trigger frame may indicate portions of the TXOP that are contention based for some HE station 104 and portions that are not contention based.

In some aspects, the multiple-access technique used during the HE control period may be a scheduled OFDMA technique, although this is not a requirement. In some aspects, the multiple access technique may be a TDMA technique or an FDMA technique. In some aspects, the multiple access technique may be a SDMA technique.

In example aspects, the HE device 104 and/or the master station 102 are configured to perform the methods and operations herein described in conjunction with FIGS. 1-3B.

In various IEEE 802.11 protocols, a packet of data is transmitted from one device to another, and these packets contain a preamble, which is a section of data at the head of the packet. The preamble is used to synchronize both the carrier frequency and modulated data before the start of the actual data. A preamble field may comprise training data that may include a long training sequence (in a long training field (LTF)) that may be used for channel estimation and fine frequency acquisition in the receiver. However, the long training sequence does not always train for each and every tone/frequency that may be used in the communication. This may create a problem caused from implementation and interoperation of different devices.

For 1x and 2x LTF (long training fields having a base duration and a duration double the base duration), the transmitter may need to interpolate beamforming vectors for sending beamformed data over the tones not trained by the 1x and 2x LTF signals. In some aspects, the receiver may also need to interpolate the channel estimates for the untrained tones so that the data on those tones may be demodulated. In some aspects, since there are many different methods used to perform the interpolation (e.g., round interpolation, linear interpolation, and MMSE interpolation), the interpolated methods at the transmitter and the receiver may be different.

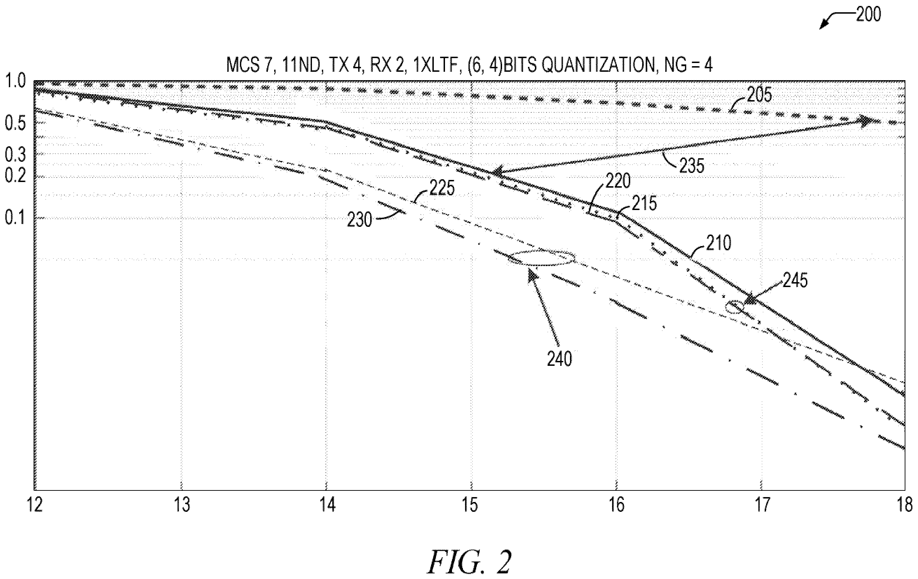

FIG. 2 is a graph 200 showing signal degradation caused by interpolation mismatch between a transmitter and a receiver, in accordance with some aspects. The graph 200 illustrates a number of transmit-receive interpolation curves with channel numbers on the abscissa and logarithmic signal value on the ordinate. These transmit-receive interpolation curves include: a transmit copy and paste interpolation, receive linear interpolation curve 205; a transmit linear interpolation, receive linear interpolation curve 210; a transmit phase alignment plus copy and paste interpolation, receive linear interpolation curve 215; a transmit phase alignment plus linear interpolation, receive linear interpolation curve 220; a transmit phase alignment plus linear interpolation, receive channel smoothing curve 225; and a transmit phase alignment plus smoothing, receive channel smoothing curve 230.

In some situations, the interpolation mismatch may cause a few dBs of degradation in performance as shown by the top two curves 205, 210 in FIG. 2, where the "copy and paste interpolation" is the round interpolation (also called nearest neighbor interpolation). As shown by the comparison at 235, without phase alignment, several dB of degradation results from interpolation mismatch.

There may be two example procedures to solve the interpolation mismatch problem, in some aspects. The first example is to reduce the difference between trained tones such that the interpolated values are within a small range. Because the interpolation range is small, the mismatch due to different interpolation methods at the transmitter and the receiver is also small. Therefore, the performance degradation is small. In some aspects, therefore, the performance degradation is insensitive to the interpolation methods used by the transmitter and the receiver, respectively.

For reducing the interpolation range, the transmitter may do phase alignment or low pass filtering (or smoothing) on the beamforming vectors across frequency. In some aspects, these schemes make the beamforming vectors smooth across frequency. Since the wireless propagation channel is smooth in nature, the beamformed channel response perceived at the receiver is thus smooth if the beamforming vectors are smooth. The performance gain of the phase alignment is shown in the middle two curves of FIG. 2. The performance gain of low pass filtering (or smoothing) is shown in the bottom two curves of FIG. 2. Since this method needs to define a smoothness requirement in the standard for the transmitter to meet, it may be opposed by some users.

In more detail, comparing the curves illustrating a transmit phase alignment plus linear interpolation, receive channel smoothing curve 225, and transmit phase alignment plus smoothing, receive channel smoothing curve 230, the comparison 240 shows that there is a small degradation from a smoothing mismatch. Comparing the curves illustrating a transmit phase alignment plus copy and paste interpolation, receive linear interpolation curve 215; a transmit phase alignment plus linear interpolation, receive linear interpolation curve 220, the comparison 245 shows that there is a no degradation from a smoothing mismatch.

The second example to address the mismatch problem is to train every single data tone, or a complete set of data tones, such that the interpolation is not needed, which reflects a tradeoff with efficiency. In the existing IEEE 802.11ax Specification, various mandatory training modes are considered, which include a multiplier on the LTF field combined with a duration of a cyclic prefix (CP) which may be, for purposes herein, to be the same as and/or serve the same function as a guard interval (GI)-these terms should be construed equivalent herein:
- 1x LTF with 0.8 µs CP
- 2x LTF with 0.8 µs CP
- 2x LTF with 1.6 µs CP
- 4x LTF with 3.2 µs CP.

Which mode is being used is indicated with existing indication bits (bits indicating the use of a particular LTF+CP combination) in an HE-SIG-A preamble field. There are currently two bits set aside that are adequate for representing which of the four mandatory training modes is being used.

The mandatory 4x LTF with 3.2 µs CP trains every single data tone. However, the 3.2 µs CP may be too long for indoor channel use in that the efficiency drops too much with the overhead of a 3.2 µs CP. Therefore, it may be desirable to provide a training mode that permits training every single data tone, but that is more efficient. In some aspects, a novel and more efficient backup mode may be added that is a 4x LTF with a 0.8 µs CP as a supported mode. A problem of this second example may be in how this mode is be indicated, since current implementations do not provide for an indication bit to indicate this backup mode. The two bits currently provided in the HE-SIG-A can only indicate the four mandatory modes, and the SU mode does not have an HE-SIG-B. The SU mode has two reserved bits and the MU mode has one reserved bit in the HE-SIG-A field. Therefore, one solution might be to use the reserved bit in HE-SIG-A to indicate the 4x LTF with 0.8 µs CP mode. However, since the reserved bits are intended for future use /features, this example solution may not be desirable. Thus, it may be beneficial to find a way to indicate use of the backup mode without using reserved bits.

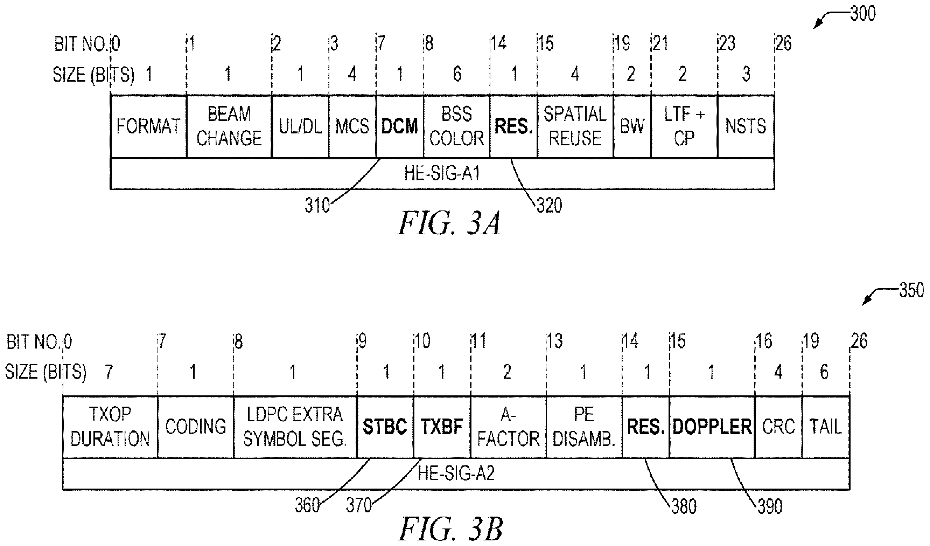

One possible solution is to consider some combinations of existing field settings are not practically useful, and thus, these combinations may be used for indicating the new backup mode LTF+CP. FIGS. 3A and 3B are block diagrams that illustrate two main parts of an example HE-SEG-A field for an HE SU PPDU and HE Extended range SU PPDU: HE-SIG-A1 300 and HE-SIG-A2 350. There are six fields that are discussed herein related to indicating the new backup mode that are in bold in FIGS. 3A and 3B: DCM 310, Reserved 320, STBC 360, TXBF 370, Reserved 380, and Doppler 390.

The DCM field 310 may be used to indicates whether or not dual sub-carrier modulation is applied to the Data field for an MCS indicated. It may be set to 1 to indicate that DCM is applied to the Data field. Neither DCM nor STBC are applied when both the DCM and STBC are set to 1. The DCM field 310 may be set to 0 to indicate that DCM is not applied to the Data field. DCM is not applied when STBC is used. The HE-SIG-A1 has a one-bit reserved field 320.

The STBC field 360 may be set to 1 if space time block coding is used, but nether DCM nor STBC are applied when both the DCM and STBC are set to 1. This field is set to 0 otherwise. The TxBF field 370 may be set to 1 if a beamforming steering matrix is applied to a waveform in a single user transmission, and set to 0 otherwise. The HE-SIG-A2 has a one-bit reserved field 380. The Doppler field 390 may be set to 1 if a Doppler mode (use of a Doppler procedure) is used, and set to 0 if a Doppler mode is not used.

If the Doppler field 390 bit is turned on for fast fading (where channel conditions vary rapidly under the transmission of a single information symbol), use of a beamforming steering matrix (indicated by the TxBF 370 field) and space time block coding (indicated by the STBC field 360) are not useful because they all rely on channel stability over time. Currently, the Doppler 390, STBC 360, and TxBF 370 fields collectively comprise three bits allowing a total of eight possible combinations, some of which are not useful. Furthermore, DCM is not needed for STBC mode because both are for diversity and one is adequate. Therefore, some of the not useful combinations described above may, in some aspects, be used to indicate the backup mode 4x LTF with 0.8 µs CP.

The fields involved may include, e.g., the Doppler field 390 bit, the DCM field 310 bit, the STBC field 360 bit, and the TxBF field 370 bit. The TxBF field 370 bit is in the HE-SIG-A for an SU PPDU and in an HE-SIG-B (not shown) for an MU PPDU. The Doppler field 390 bit, the DCM field 310 bit, and the STBC field 360 bit are in the HE-SIG-A.

In some aspects, four bits may be divided into three groups by compatibility. In a first group, when the Doppler field 390 bit indicates fast fading (or, more precisely, a traveling pilot), STBC and TxBF are not useful because they rely on static or semi-static channels. Therefore, the combination (Doppler on, STBC on) or (Doppler on, TxBF on) may be used to indicate the backup mode 4x LTF with 0.8 µs CP.

In the second group, when the DCM field 310 bit indicates dual carrier modulation is used, the STBC is not that useful because both are for diversity and one is usually enough. Therefore, the combination (DCM on, STBC on) may be used to indicate the backup mode 4x LTF with 0.8 µs CP.

In the third group, when the STBC field 360 indicates a space time block code is used, the transmit beamforming is not useful. The STBC is used without channel state information, but transmit beamforming (TxBF) is used with channel state information-these two are incompatible. Therefore, the combination (STBC on, TxBF on) may be used to indicate the backup mode 4x LTF with 0.8 µs CP. In some aspects, for an uplink transmission, the STA first needs to add the backup transmission mode of 4x LTF with 0.8 µs CP. If the STA initiates the transmission, it may use some combination of the four bits described above.

In an aspect that does not use the HE-SIG field, if the AP triggers the transmission, the AP may add the indication using the backup mode of 4x LTF with 0.8 µs CP in the trigger frame content. Since the trigger frame is in the MAC payload and has more room, there is more room and flexibility to add this indication in a bit to the MAC trigger frame than to the PHY HE-SIG field.

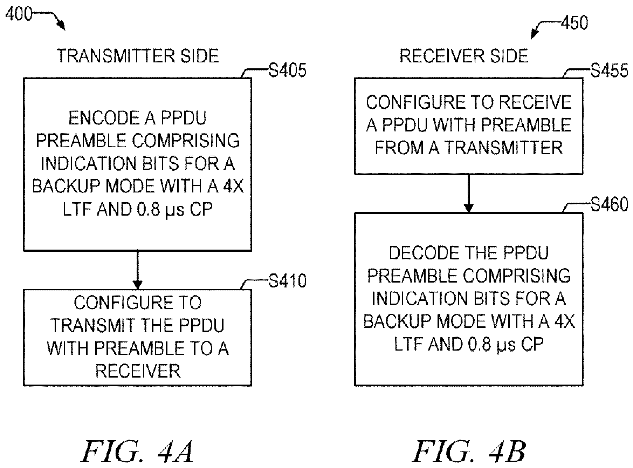

FIG. 4A is a flowchart illustrating and example process 400 that may be used to implement the above-described mechanisms for a transmitter. At operation S405, the mechanism may encode a PPDU preamble comprising the indication bits identified above for a backup mode with a 4X LTF and 0.8 µs CP. At operation S410, the mechanism may configure the transmitter to transmit the encoded PPDU to a receiver. FIG. 4B is a flowchart illustrating and example process 450 that may be used to implement the above-described mechanisms for a receiver. At operation S455, the mechanism may configure the receiver to receive an encoded PPDU from a transmitter. At operation S460, the mechanism may decode the PPDU preamble comprising the indication bits identified above for a backup mode with a 4X LTF and 0.8 µs CP.

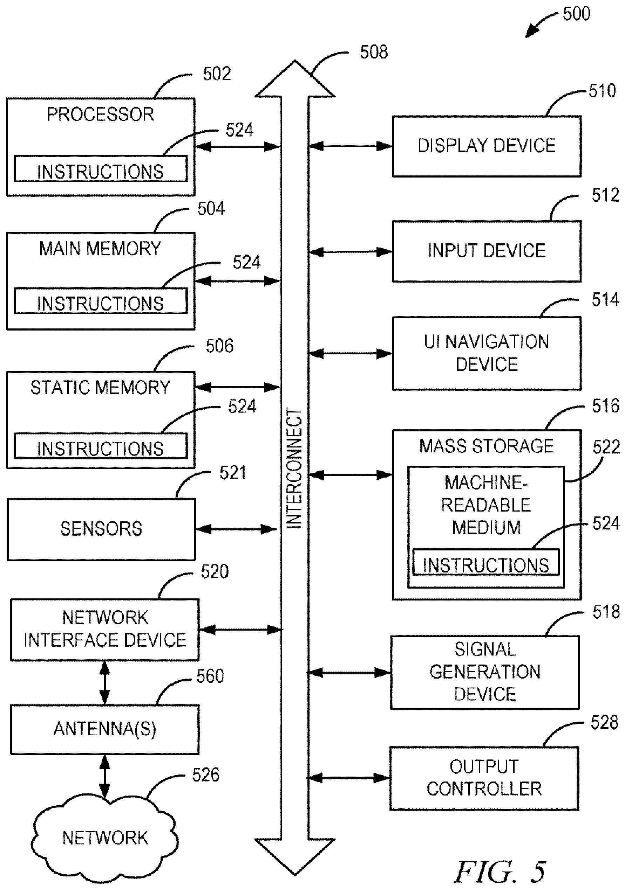

FIG. 5 is a block diagram of an example machine 500 upon which any one or more of the techniques (e.g., methodologies) discussed herein may perform. In alternative aspects, the machine 500 may operate as a standalone device or may be connected (e.g., networked) to other machines. In a networked deployment, the machine 500 may operate in the capacity of a server machine, a client machine, or both in server-client network environments. In an example, the machine 500 may act as a peer machine in peer-to-peer (P2P) (or other distributed) network environment. The machine 500 may be a master station 102, HE station 104, PC, a tablet PC, an STB, a PDA, a mobile telephone, a smart phone, a web appliance, a network router, switch or bridge, or any machine capable of executing instructions (sequential or otherwise) that specify actions to be taken by that machine. Further, while only a single machine is illustrated, the term "machine" may also be taken to include any collection of machines that individually or jointly execute a set (or multiple sets) of instructions to perform any one or more of the methodologies discussed herein, such as cloud computing, software as a service (SaaS), other computer cluster configurations.

Examples, as described herein, may include, or may operate on, logic or a number of components, modules, or mechanisms. Modules are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a machine readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

Machine (e.g., computer system) 500 may include a hardware processor 502 (e.g., CPU), a GPU, a hardware processor core, or any combination thereof), a main memory 504 and a static memory 506, some or all of which may communicate with each other via an interlink (e.g., bus) 508. The machine 500 may further include a display device 510, an input device 512 (e.g., a keyboard), and a UI navigation device 514 (e.g., a mouse). In an example, the display device 510, input device 512 and UI navigation device 514 may be a touch screen display. The machine 500 may additionally include a mass storage (e.g., drive unit) 516, a signal generation device 518 (e.g., a speaker), a network interface device 520, and one or more sensors 521, such as a GPS sensor, compass, accelerometer, or other sensor. The machine 500 may include an output controller 528, such as a serial (e.g., USB), parallel, or other wired or wireless (e.g., IR, NFC, etc.) connection to communicate or control one or more peripheral devices (e.g., a printer, card reader, etc.). In some aspects, the processor 502 and/or instructions 524 may comprise processing circuitry and/or transceiver circuitry.

The storage device 516 may include a machine readable medium 522 on which is stored one or more sets of data structures or instructions 524 (e.g., software) embodying or utilized by any one or more of the techniques or functions described herein. The instructions 524 may also reside, completely or at least partially, within the main memory 504, within static memory 506, or within the hardware processor 502 during execution thereof by the machine 500. In an example, one or any combination of the hardware processor 502, the main memory 504, the static memory 506, or the storage device 516 may constitute machine readable media.

While the machine readable medium 522 is illustrated as a single medium, the term "machine readable medium" may include a single medium or multiple media (e.g., a centralized or distributed database, and/or associated caches and servers) configured to store the one or more instructions 524.

An apparatus of the machine 500 may be one or more of a hardware processor 502 (e.g., a CPU, a GPU, a hardware processor core, or any combination thereof), a main memory 504 and a static memory 506, some or all of which may communicate with each other via an interlink (e.g., bus) 508.

The term "machine readable medium" may include any medium that is capable of storing, encoding, or carrying instructions for execution by the machine 500 and that cause the machine 500 to perform any one or more of the techniques of the present disclosure, or that is capable of storing, encoding or carrying data structures used by or associated with such instructions. Nonlimiting machine readable medium examples may include solid-state memories, and optical and magnetic media. Specific examples of machine readable media may include: non-volatile memory, such as semiconductor memory devices (e.g., EPROM), EEPROM and flash memory devices; magnetic disks, such as internal hard disks and removable disks; magneto-optical disks; RAM; and CD-ROM and DVD-ROM disks. In some examples, machine readable media may include non-transitory machine readable media. In some examples, machine readable media may include machine readable media that is not a transitory propagating signal.

The instructions 524 may further be transmitted or received over a communications network 526 using a transmission medium via the network interface device 520 utilizing any one of a number of transfer protocols (e.g., frame relay, IP, TCP, UDP, HTTP, etc.). Example communication networks may include a LAN, a WAN, a packet data network (e.g., the Internet), mobile telephone networks (e.g., cellular networks), POTS networks, and wireless data networks (e.g., IEEE 802.11 family of standards known as Wi-Fi®, IEEE 802.16 family of standards known as WiMax®), IEEE 802.15.4 family of standards, an LTE family of standards, a UMTS family of standards, P2P networks, among others.

In an example, the network interface device 520 may include one or more physical jacks (e.g., Ethernet, coaxial, or phone jacks) or one or more antennas to connect to the communications network 526. In an example, the network interface device 520 may include one or more antennas 560 to wirelessly communicate using at least one of SIMO, MIMO, or MISO techniques. In some examples, the network interface device 520 may wirelessly communicate using MIMO techniques. The term "transmission medium" may be taken to include any intangible medium that is capable of storing, encoding or carrying instructions for execution by the machine 500, and includes digital or analog communications signals or other intangible medium to facilitate communication of such software.

Various aspects may be implemented fully or partially in software and/or firmware. This software and/or firmware may take the form of instructions contained in or on a non-transitory computer-readable storage medium. Those instructions may then be read and executed by one or more processors to enable performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to ROM; RAM; magnetic disk storage media; optical storage media; flash memory, etc.

### EXAMPLES

Example 1 is an apparatus of a wireless device, the apparatus comprising: memory; and processing circuitry coupled to the memory, the processing circuity configured to: encode one or more indication bits in a high-efficiency signal A (HE-SIG-A) field in a preamble of a physical layer convergence protocol (PLCP) protocol data unit (PPDU) to indicate a backup mode that is a 4x long training field (LTF) with 0.8 µs cyclic prefix (CP) mode, wherein the processing circuitry is configured to select the one or more indication bits is from: a Doppler bit, a dual carrier modulation (DCM) bit, a space-time block coding (STBC) bit, and a transmit beamforming (TxBF) bit; and configure the wireless device to transmit the PPDU to one or more stations.

In Example 2, the subject matter of Example 1 optionally includes wherein the processing circuitry is configured to select the one or more indication bits is from the DCM bit and the STBC bit.

In Example 3, the subject matter of Example 2 optionally includes wherein the backup mode is indicated when the DCM bit equals one and the STBC bit equals one.

In Example 4, the subject matter of any one or more of Examples 1-3 optionally include wherein the backup mode is indicated in combination with a guard interval (GI) + LTF size field of the HE-SIG-A field.

In Example 5, the subject matter of Example 4 optionally includes wherein the GI + LTF size field is a two-bit field.

In Example 6, the subject matter of Example 5 optionally includes wherein the GI + LTF size field is configurable to indicate each of the following modes: a 1x LTF with 0.8 µs CP mode; a 2x LTF with 0.8 µs CP mode; a 2x LTF with 1.6 µs CP mode; and a 4x LTF with 3.2 µs CP mode.

In Example 7, the subject matter of any one or more of Examples 1-6 optionally include wherein the LTF, when configured in the backup mode, is used for channel and fine frequency estimation.

In Example 8, the subject matter of Example 7 optionally includes wherein the LTF, when configured in the backup mode, is used to train a complete set of data tones.

In Example 9, the subject matter of any one or more of Examples 1-8 optionally include access point.

In Example 10, the subject matter of any one or more of Examples 1-9 optionally include transceiver circuitry coupled to the processing circuitry.

In Example 11, the subject matter of Example 10 optionally includes one or more antennas coupled to the transceiver circuitry.

Example 12 is an apparatus of a wireless device, the apparatus comprising: memory; and processing circuitry coupled to the memory, the processing circuity configured to: decode one or more indication bits in a high-efficiency signal A (HE-SIG-A) field in a preamble of a physical layer convergence protocol (PLCP) protocol data unit (PPDU) to indicate a backup mode that is a 4x long training field (LTF) with 0.8 µs cyclic prefix (CP) mode, wherein the one or more indication bits is selected from: a Doppler bit, a dual carrier modulation (DCM) bit, a space-time block coding (STBC) bit, and a transmit beamforming (TxBF) bit; and configure the wireless device to transmit the PPDU to one or more stations.

In Example 13, the subject matter of Example 12 optionally includes wherein the one or more indication bits is selected from the DCM bit and the STBC bit.

In Example 14, the subject matter of Example 13 optionally includes wherein the backup mode is indicated when the DCM bit equals one and the STBC bit equals one.

In Example 15, the subject matter of any one or more of Examples 12-14 optionally include wherein the backup mode is indicated in combination with a guard interval (GI) + LTF size field of the HE-SIG-A field.

In Example 16, the subject matter of Example 15 optionally includes wherein the GI + LTF size field is a two-bit field.

In Example 17, the subject matter of Example 16 optionally includes wherein the GI + LTF size field is configurable to indicate each of the following modes: a 1x LTF with 0.8 µs CP mode; a 2x LTF with 0.8 µs CP mode; a 2x LTF with 1.6 µs CP mode; and a 4x LTF with 3.2 µs CP mode.

In Example 18, the subject matter of any one or more of Examples 12-17 optionally include wherein the LTF, when configured in the backup mode, is used for channel and fine frequency estimation.

In Example 19, the subject matter of Example 18 optionally includes wherein the LTF, when configured in the backup mode, is used to train a complete set of data tones.

In Example 20, the subject matter of any one or more of Examples 12-19 optionally include access point.

In Example 21, the subject matter of any one or more of Examples 12-20 optionally include transceiver circuitry coupled to the processing circuitry.

In Example 22, the subject matter of Example 21 optionally includes one or more antennas coupled to the transceiver circuitry.

Example 23 is a method performed by a wireless communication device, the device comprising memory; and processing circuitry coupled to the memory, the method comprising: encoding one or more indication bits received in a high-efficiency signal A (HE-SIG-A) field in a preamble of a physical layer convergence protocol (PLCP) protocol data unit (PPDU) to indicate a backup mode that is a 4x long training field (LTF) with 0.8 µs cyclic prefix (CP) mode, wherein the processing circuitry selects the one or more indication bits is from: a Doppler bit, a dual carrier modulation (DCM) bit, a space-time block coding (STBC) bit, and a transmit beamforming (TxBF) bit; and configuring the wireless device to transmit a PPDU from one or more stations.

In Example 24, the subject matter of Example 23 optionally includes wherein the processing circuitry selects the one or more indication bits is from the DCM bit and the STBC bit.

In Example 25, the subject matter of Example 24 optionally includes wherein the backup mode is indicated when the DCM bit equals one and the STBC bit equals one.

In Example 26, the subject matter of any one or more of Examples 23-25 optionally include wherein the backup mode is indicated in combination with a guard interval (GI) + LTF size field of the HE-SIG-A field.

In Example 27, the subject matter of Example 26 optionally includes wherein the GI + LTF size field is a two-bit field.

In Example 28, the subject matter of Example 27 optionally includes wherein the GI + LTF size field is configurable to indicate each of the following modes: a 1x LTF with 0.8 µs CP mode; a 2x LTF with 0.8 µs CP mode; a 2x LTF with 1.6 µs CP mode; and a 4x LTF with 3.2 µs CP mode.

In Example 29, the subject matter of any one or more of Examples 23-28 optionally include configuring the LTF in the backup mode to use for channel and fine frequency estimation.

In Example 30, the subject matter of Example 29 optionally includes configuring the LTF in the backup mode to use for training a complete set of data tones.

In Example 31, the subject matter of any one or more of Examples 23-30 optionally include access point.

In Example 32, the subject matter of any one or more of Examples 23-31 optionally include wherein transceiver circuitry is coupled to the processing circuitry.

In Example 33, the subject matter of Example 32 optionally includes wherein one or more antennas is coupled to the transceiver circuitry.

In Example 34, the subject matter of any one or more of Examples 23-33 optionally include transmitting the PPDU.

Example 35 is a method performed by a wireless communication device, the device comprising memory; and processing circuitry coupled to the memory, the method comprising: configuring the wireless device to receive a PPDU from one or more stations; and decoding one or more indication bits received in a high-efficiency signal A (HE-SIG-A) field in a preamble of a physical layer convergence protocol (PLCP) protocol data unit (PPDU) to indicate a backup mode that is a 4x long training field (LTF) with 0.8 µs cyclic prefix (CP) mode, wherein the one or more indication bits is selected from: a Doppler bit, a dual carrier modulation (DCM) bit, a space-time block coding (STBC) bit, and a transmit beamforming (TxBF) bit.

In Example 36, the subject matter of Example 35 optionally includes wherein the one or more indication bits is selected from the DCM bit and the STBC bit.

In Example 37, the subject matter of Example 36 optionally includes wherein the backup mode is indicated when the DCM bit equals one and the STBC bit equals one.

In Example 38, the subject matter of any one or more of Examples 35-37 optionally include wherein the backup mode is indicated in combination with a guard interval (GI) + LTF size field of the HE-SIG-A field.

In Example 39, the subject matter of Example 38 optionally includes wherein the GI + LTF size field is a two-bit field.

In Example 40, the subject matter of Example 39 optionally includes wherein the GI + LTF size field is configurable to indicate each of the following modes: a 1x LTF with 0.8 µs CP mode; a 2x LTF with 0.8 µs CP mode; a 2x LTF with 1.6 µs CP mode; and a 4x LTF with 3.2 µs CP mode.

In Example 41, the subject matter of any one or more of Examples 35-40 optionally include utilizing the LTF configured in the backup mode for channel and fine frequency estimation.

In Example 42, the subject matter of Example 41 optionally includes utilizing the LTF configured in the backup mode to train a complete set of data tones.

In Example 43, the subject matter of any one or more of Examples 35-42 optionally include access point.

In Example 44, the subject matter of any one or more of Examples 35-43 optionally include transceiver circuitry coupled to the processing circuitry.

In Example 45, the subject matter of Example 44 optionally includes one or more antennas coupled to the transceiver circuitry.

In Example 46, the subject matter of any one or more of Examples 35-45 optionally include receiving the PPDU.

Example 47 is a computer-readable storage medium that stores instructions for execution by one or more processors, the instructions to configure the one or more processors to cause a wireless device to: encode one or more indication bits in a high-efficiency signal A (HE-SIG-A) field in a preamble of a physical layer convergence protocol (PLCP) protocol data unit (PPDU) to indicate a backup mode that is a 4x long training field (LTF) with 0.8 µs cyclic prefix (CP) mode, wherein the instructions cause the one or more processors to select the one or more indication bits from: a Doppler bit, a dual carrier modulation (DCM) bit, a space-time block coding (STBC) bit, and a transmit beamforming (TxBF) bit; and configure the wireless device to transmit the PPDU to one or more stations.

In Example 48, the subject matter of Example 47 optionally includes wherein the instructions cause the one or more processors to select the one or more indication bits from the DCM bit and the STBC bit.

In Example 49, the subject matter of Example 48 optionally includes wherein the backup mode is indicated when the DCM bit equals one and the STBC bit equals one.

In Example 50, the subject matter of any one or more of Examples 47-49 optionally include wherein the backup mode is indicated in combination with a guard interval (GI) + LTF size field of the HE-SIG-CRM field.

In Example 51, the subject matter of Example 50 optionally includes wherein the GI + LTF size field is a two-bit field.

In Example 52, the subject matter of Example 51 optionally includes wherein the GI + LTF size field is configurable to indicate each of the following modes: a 1x LTF with 0.8 µs CP mode; a 2x LTF with 0.8 µs CP mode; a 2x LTF with 1.6 µs CP mode; and a 4x LTF with 3.2 µs CP mode.

In Example 53, the subject matter of any one or more of Examples 47-52 optionally include wherein the LTF, when configured in the backup mode, is used for channel and fine frequency estimation.

In Example 54, the subject matter of Example 53 optionally includes wherein the LTF, when configured in the backup mode, is used to train a complete set of data tones.

In Example 55, the subject matter of any one or more of Examples 47-54 optionally include access point.

Example 56 is a computer-readable storage medium that stores instructions for execution by one or more processors, the instructions to configure the one or more processors to cause a wireless device to: decode one or more indication bits in a high-efficiency signal CRM (HE-SIG-CRM) field in a preamble of a physical layer convergence protocol (PLCP) protocol data unit (PPDU) to indicate a backup mode that is a 4x long training field (LTF) with 0.8 µs cyclic prefix (CP) mode, wherein the instructions cause the one or more processors to select the one or more indication bits from: a Doppler bit, a dual carrier modulation (DCM) bit, a space-time block coding (STBC) bit, and a transmit beamforming (TxBF) bit; and configure the wireless device to transmit the PPDU to one or more stations.

In Example 57, the subject matter of Example 56 optionally includes wherein the one or more indication bits is selected from the DCM bit and the STBC bit.

In Example 58, the subject matter of Example 57 optionally includes wherein the backup mode is indicated when the DCM bit equals one and the STBC bit equals one.

In Example 59, the subject matter of any one or more of Examples 56-58 optionally include wherein the backup mode is indicated in combination with a guard interval (GI) + LTF size field of the HE-SIG-CRM field.

In Example 60, the subject matter of Example 59 optionally includes wherein the GI + LTF size field is a two-bit field.

In Example 61, the subject matter of Example 60 optionally includes wherein the GI + LTF size field is configurable to indicate each of the following modes: a 1x LTF with 0.8 µs CP mode; a 2x LTF with 0.8 µs CP mode; a 2x LTF with 1.6 µs CP mode; and a 4x LTF with 3.2 µs CP mode.

In Example 62, the subject matter of any one or more of Examples 56-61 optionally include wherein the LTF, when configured in the backup mode, is used for channel and fine frequency estimation.

In Example 63, the subject matter of Example 62 optionally includes wherein the LTF, when configured in the backup mode, is used to train a complete set of data tones.

In Example 64, the subject matter of any one or more of Examples 56-63 optionally include access point.

Example 65 is a computer program product comprising one or more computer readable storage media comprising computer-executable instructions operable to, when executed by processing circuitry of a device, configure the device to perform any of the methods of Examples 35-46.

Example 66 is a system comprising means to perform any of the methods of Examples 35-46.

Example 67 is a computer program product comprising one or more computer readable storage media comprising computer-executable instructions operable to, when executed by processing circuitry of a device, configure the device to perform any of the methods of Examples 23-46.

Example 68 is a system comprising means to perform any of the methods of Examples 23-46.

Example 69 is an apparatus of a wireless device, comprising: means for encoding one or more indication bits received in a high-efficiency signal A (HE-SIG-A) field in a preamble of a physical layer convergence protocol (PLCP) protocol data unit (PPDU) to indicate a backup mode that is a 4x long training field (LTF) with 0.8 µs cyclic prefix (CP) mode; means for selecting the one or more indication bits from: a Doppler bit, a dual carrier modulation (DCM) bit, a space-time block coding (STBC) bit, and a transmit beamforming (TxBF) bit; and means for configuring the wireless device to transmit a PPDU from one or more stations.

In Example 70, the subject matter of Example 69 optionally includes means for selecting the one or more indication bits from the DCM bit and the STBC bit.

In Example 71, the subject matter of Example 70 optionally includes wherein the backup mode is indicated when the DCM bit equals one and the STBC bit equals one.

In Example 72, the subject matter of any one or more of Examples 69-71 optionally include wherein the backup mode is indicated in combination with a guard interval (GI) + LTF size field of the HE-SIG-A field.

In Example 73, the subject matter of Example 72 optionally includes wherein the GI + LTF size field is a two-bit field.

In Example 74, the subject matter of Example 73 optionally includes wherein the GI + LTF size field is configurable to indicate each of the following modes: a 1x LTF with 0.8 µs CP mode; a 2x LTF with 0.8 µs CP mode; a 2x LTF with 1.6 µs CP mode; and a 4x LTF with 3.2 µs CP mode.

In Example 75, the subject matter of any one or more of Examples 69-74 optionally include means for configuring the LTF in the backup mode to use for channel and fine frequency estimation.

In Example 76, the subject matter of Example 75 optionally includes means for configuring the LTF in the backup mode to use for training a complete set of data tones.

In Example 77, the subject matter of any one or more of Examples 69-76 optionally include access point.

In Example 78, the subject matter of any one or more of Examples 69-77 optionally include means for transmitting.

In Example 79, the subject matter of Example 78 optionally includes antenna means.

In Example 80, the subject matter of any one or more of Examples 69-79 optionally include means for transmitting the PPDU.

Example 81 is an apparatus of a wireless device, comprising: means for configuring the wireless device to receive a PPDU from one or more stations; and means for decoding one or more indication bits received in a high-efficiency signal A (HE-SIG-A) field in a preamble of a physical layer convergence protocol (PLCP) protocol data unit (PPDU) to indicate a backup mode that is a 4x long training field (LTF) with 0.8 µs cyclic prefix (CP) mode; means for selecting the one or more indication bits from: a Doppler bit, a dual carrier modulation (DCM) bit, a space-time block coding (STBC) bit, and a transmit beamforming (TxBF) bit.

In Example 82, the subject matter of Example 81 optionally includes means for selecting the one or more indication bits from the DCM bit and the STBC bit.

In Example 83, the subject matter of Example 82 optionally includes wherein the backup mode is indicated when the DCM bit equals one and the STBC bit equals one.

In Example 84, the subject matter of any one or more of Examples 81-83 optionally include wherein the backup mode is indicated in combination with a guard interval (GI) + LTF size field of the HE-SIG-A field.

In Example 85, the subject matter of Example 84 optionally includes wherein the GI + LTF size field is a two-bit field.

In Example 86, the subject matter of Example 85 optionally includes wherein the GI + LTF size field is configurable to indicate each of the following modes: a 1x LTF with 0.8 µs CP mode; a 2x LTF with 0.8 µs CP mode; a 2x LTF with 1.6 µs CP mode; and a 4x LTF with 3.2 µs CP mode.

In Example 87, the subject matter of any one or more of Examples 81-86 optionally include means for utilizing LTF in the backup mode for channel and fine frequency estimation.

In Example 88, the subject matter of Example 87 optionally includes utilizing the LTF in the backup mode to train a complete set of data tones.

In Example 89, the subject matter of any one or more of Examples 81-88 optionally include access point.

In Example 90, the subject matter of any one or more of Examples 81-89 optionally include receiver means.

In Example 91, the subject matter of Example 90 optionally includes antenna means.

In Example 92, the subject matter of any one or more of Examples 81-91 optionally include receiving the PPDU.

Example 93 is at least one machine-readable medium including instructions, which when executed by a machine, cause the machine to perform operations of any of the operations of the Examples 1-92.

Example 94 is an apparatus comprising means for performing an of the operations of the Examples 1-92.

Example 95 is a system to perform the operations of any of the Examples 1-92.

Example 96 is a method to perform the operations of any of the Examples 1-92.

## Claims

1. An apparatus of a wireless device, the apparatus comprising: memory; and processing circuitry coupled to the memory, the processing circuity configured to:
encode one or more indication bits in a high-efficiency signal A (HE-SIG-A) field in a preamble of a physical layer convergence protocol (PLCP) protocol data unit (PPDU) to indicate a backup mode that is a 4x long training field (LTF) with 0.8 µs cyclic prefix (CP) mode, wherein the processing circuitry is configured to select the one or more indication bits is from:
a Doppler bit, a dual carrier modulation (DCM) bit, a space-time block coding (STBC) bit, and a transmit beamforming (TxBF) bit; and
configure the wireless device to transmit the PPDU to one or more stations.

2. The apparatus of claim 1, wherein the processing circuitry is configured to select the one or more indication bits is from the DCM bit and the STBC bit.

3. The apparatus of claim 2, wherein the backup mode is indicated when the DCM bit equals one and the STBC bit equals one.

4. The apparatus of claim 1, wherein the backup mode is indicated in combination with a guard interval (GI) + LTF size field of the HE-SIG-A field.

5. The apparatus of claim 4, wherein the GI + LTF size field is a two-bit field.

6. A method performed by a wireless communication device, the device comprising memory; and processing circuitry coupled to the memory, the method comprising:
configuring the wireless device to receive a PPDU from one or more stations; and
decoding one or more indication bits received in a high-efficiency signal A (HE-SIG-A) field in a preamble of a physical layer convergence protocol (PLCP) protocol data unit (PPDU) to indicate a backup mode that is a 4x long training field (LTF) with 0.8 µs cyclic prefix (CP) mode, wherein the one or more indication bits is selected from:
a Doppler bit, a dual carrier modulation (DCM) bit, a space-time block coding (STBC) bit, and a transmit beamforming (TxBF) bit.

7. The method of claim 6, wherein the one or more indication bits is selected from the DCM bit and the STBC bit.

8. The method of claim 7, wherein the backup mode is indicated when the DCM bit equals one and the STBC bit equals one.

9. The method of claim 6, wherein the backup mode is indicated in combination with a guard interval (GI) + LTF size field of the HE-SIG-A field.

10. The method of claim 9, wherein the GI + LTF size field is a two-bit field.

11. The method of claim 10, wherein the GI + LTF size field is configurable to indicate each of the following modes:
a 1x LTF with 0.8 µs CP mode;
a 2x LTF with 0.8 µs CP mode;
a 2x LTF with 1.6 µs CP mode; and
a 4x LTF with 3.2 µs CP mode.

12. The method of claim 6, further comprising utilizing the LTF configured in the backup mode for channel and fine frequency estimation.

13. The method of claim 12, further comprising utilizing the LTF configured in the backup mode to train a complete set of data tones.

14. A computer program product comprising one or more computer readable storage media comprising computer-executable instructions operable to, when executed by processing circuitry of a device, configure the device to perform any of the methods of claims 6-13.

15. A system comprising means to perform any of the methods of claims 6-13.
